# FASCICULE DE BREVET EUROPEEN

(11) **EP 2 228 119 B1**
(45) Date de publication et mention de la délivrance du brevet: **19.08.2015**
(21) Numéro de dépôt: 10290056.0
(22) Date de dépôt: 08.02.2010
(51) Int. Cl.: B01D 53/14, B01D 53/52, B01D 53/78, B01D 53/34, B01D 53/62

(54) **Procédé de désacidification d'un gaz par une solution absorbante, avec section de lavage à l'eau optimisée**
Verfahren zur Entsäuerung eines Gases mit einer absorbierenden Lösung und einem optimierten Waschabschnitt mit Wasser
Method for removing acid gas from a gas using an absorbing solution, with an optimised water wash section

(30) Priorité: 05.03.2009 FR 0901009
(43) Date de publication de la demande: 15.09.2010
(73) Titulaire: IFP Energies nouvelles, 92852 Rueil-Malmaison Cedex (FR)
(72) Inventeur: Bouillon, Pierre-Antoine, 69003 Lyon (FR); Lemaire, Eric, 69480 Anse (FR)

(56) Documents cités:
- EP-A1- 0 502 596
- EP-A1- 1 132 125
- EP-A1- 1 334 759
- EP-A2- 0 798 029
- US-A1- 2003 140 786
- US-A1- 2004 253 159
- ASPELUND ET AL: "Gas conditioning-The interface between CO2 capture and transport" 20070616, vol. 1, no. 3, 16 juin 2007 (2007-06-16), pages 343-354, XP022119495
- D.G. CHAPEL, C.L. MARIZ, J. ERNEST: "Recovery of CO2 from Flue Gases: Commercial Trends" CANADIAN SOCIETY OF CHEMICAL ENGINEERS ANNUAL MEETING, 4 octobre 1999 (1999-10-04), - 6 octobre 1999 (1999-10-06) pages 1-16, XP002534458 Saskatoon, Canada
- A.L. KOHL, R.B. NIELSEN: "Gas Purification, fifth edition" 1997, GULF PUBLISHING COMPANY , HOUSTON, TEXAS , XP002534459 * page 57 - page 59 * * page 58, alinéa 3 *

## Description

La présente invention concerne le domaine de la désacidification d'un gaz, par exemple la décarbonatation des fumées de combustion ou la désacidification d'un gaz naturel.

Afin de limiter le phénomène de réchauffement climatique, le dioxyde de carbone est extrait des fumées de combustion en vue d'être séquestré dans un réservoir souterrain. Dans le cas du gaz naturel, la teneur en dioxyde de carbone et en hydrogène sulfureux est réduite pour des raisons de toxicités, pour améliorer le pouvoir calorifique du gaz et, éventuellement, pour permettre la liquéfaction du gaz naturel pour transport par bateau.

On utilise couramment des procédés d'absorption mettant en oeuvre une solution aqueuse d'amine, pour retirer le CO₂ et l'H₂S d'un gaz. Le gaz est purifié par mise en contact avec la solution absorbante, puis la solution absorbante est régénérée thermiquement.

Le document EP 502 596 propose un procédé de décarbonatation de fumées de combustion, dans lequel le gaz purifié est lavé par de l'eau pour retirer les composés réactifs de la solution absorbante, qui ont été entraînés par le gaz.

Le document EP1132125 décrit un procédé de décarbonatation de fumées de combustion comprenant une étape de lavage à l'eau des fumées décarbonatées, dans lequel la quantité d'eau de lavage est contrôlée en fonction du niveau de liquide en fond de colonne d'absorption.

Le document EP798029 décrit un procédé de décarbonatation de fumées de combustion comprenant une étape de lavage à l'eau des fumées décarbonatées, dans lequel on impose une température d'eau de lavage comprise entre 20°C et 60°C.

La présente invention propose de perfectionner le lavage à l'eau en mettant en oeuvre une eau de lavage froide afin de refroidir le gaz traité à une température inférieure ou égale à la température du gaz d'entrée dans le but de réduire la quantité de composés réactifs entraînés par le gaz traité.

La présente invention concerne un procédé de captage des composés acides, incluant au moins l'un des composés CO₂ et H₂S, contenus dans un gaz à traiter, dans lequel on effectue les étapes suivantes :
a) on met en contact le gaz à traiter avec une solution absorbante comportant des composés réactifs en solution aqueuse de manière à obtenir un gaz appauvri en composés acides et une solution absorbante enrichie en composés acides,
b) on régénère au moins une fraction de la solution absorbante enrichie en composés acides dans une colonne de régénération de manière à obtenir une solution absorbante régénérée et un effluent gazeux riche en composés acides, la solution absorbante régénérée étant recyclée à l'étape a) en tant que solution absorbante,
c) on lave dans une section de lavage le gaz appauvri en composés acides obtenu à l'étape a) par mise en contact avec un flux d'eau liquide ;
d) on mesure la température du gaz lavé (18) au moyen d'un premier capteur de température et la température dudit gaz à traiter au moyen d'un deuxième capteur de température ;
e) on abaisse la température du gaz lavé en dessous de la température dudit gaz à traiter, en refroidissant ledit gaz lavé au moyen dudit flux d'eau liquide dont la température est ajustée en fonction desdites températures mesurées par le pilotage d'une vanne commandant le débit d'un fluide frigorigène alimentant un échangeur de chaleur, ledit échangeur de chaleur recevant une partie de l'eau obtenue en fond de la section de lavage pour constituer au moins une partie dudit flux d'eau liquide ; et
f) on évacue dudit procédé une quantité d'eau contenue dans l'effluent gazeux riche en composés acides.

Selon l'invention, à l'étape e) le flux d'eau liquide peut être refroidi à une température déterminée de manière à obtenir un gaz lavé dont la température est inférieure d'une valeur comprise entre 1°C et 20°C à la température dudit gaz à traiter.

On peut condenser partiellement par refroidissement l'effluent gazeux riche en composés acides pour obtenir des condensats liquides et un gaz enrichi en composés acides et on peut introduire au moins une première partie des condensats dans la colonne de régénération.

Au moins une partie de ladite quantité d'eau peut être composée d'une deuxième partie desdits condensats liquides.

Au moins une partie de ladite quantité d'eau peut être évacuée sous forme vapeur dans ledit gaz enrichi en composés acides. Par exemple, le gaz enrichi en composés acides est partiellement condensé par refroidissement pour produire des condensats liquides et une phase gazeuse qui est comprimée.

On peut recycler une autre partie de l'eau obtenue en fond de la section de lavage, en effectuant au moins l'une des opérations suivantes :
- on mélange ladite partie de l'eau avec la solution absorbante régénérée obtenue à l'étape b),
- on introduit ladite partie de l'eau dans la colonne de régénération,
- on mélange ladite partie de l'eau avec la solution absorbante enrichie en composés acides obtenue à l'étape a).

On peut prélever une troisième partie des condensats et, à l'étape c), on peut mettre en contact le gaz appauvri en composés acides obtenus à l'étape a) avec un flux d'eau liquide et, en outre, avec ladite troisième partie des condensats prélevés.

La section de lavage peut comporter une première et une deuxième zone de mise en contact et dans lequel, à l'étape c), on peut mettre en contact dans la première zone de mise en contact le gaz appauvri en composés acides obtenu à l'étape a) avec une partie de l'eau obtenue en fond de la section de lavage de manière à obtenir un gaz prélavé, puis on peut mettre en contact dans la deuxième zone de mise en contact ledit gaz prélavé avec ladite troisième partie des condensats prélevés.

On peut faire circuler le gaz lavé obtenu à l'étape c) à travers un moyen de séparation mécanique entre gaz et liquide.

La solution aqueuse d'amine peut comporter entre 10 % et 80 % poids de composés réactifs choisis dans la liste constituée par la monoéthanolamine, la diéthanolamine, la diméthyléthanolamine, la diisopropylamine, la diglycolamine, la pipérazine, l'hydroxyéthyl piperazine, la N,N,N',N'-Tétraméthylhexane-1,6-diamine, le sulfolane, les polyéthylèneglycols, les pyrrolydones, la N-formyl morpholine, l'acétyl morpholine, le carbonate de propylène.

Le gaz à traiter peut être choisi dans la liste constituée par une fumée de combustion, un gaz naturel, un gaz obtenu en queue d'un procédé Claus, un gaz de synthèse, un gaz de conversion mis en oeuvre dans les centrales intégrées de combustion de charbon, de bois, de brut lourd ou de gaz naturel, un gaz issu de la fermentation de biomasse, un effluent issu d'une cimenterie ou d'une usine de sidérurgie.

La méthode selon l'invention permet d'optimiser le fonctionnement de la section de lavage à l'eau, tout en limitant la consommation énergétique nécessaire à la mise en oeuvre du lavage à l'eau du gaz purifié et en garantissant l'équilibre du bilan en eau du procédé.

La tension vapeur des composés réactifs dans le gaz traité diminue avec la température. En conséquence, le fait de refroidir le gaz par le lavage à l'eau permet de déplacer l'équilibre thermodynamique en diminuant la concentration en composés réactifs dans le gaz traité.

De plus, le refroidissement du gaz à basse température permet de condenser une quantité plus importante d'eau. De ce fait la concentration en composés réactifs dans l'eau de lavage diminue, ce qui augmente la capacité de l'eau de lavage à capter les composés réactifs entraînés par le gaz traité.

D'autres caractéristiques et avantages de l'invention seront mieux compris et apparaîtront clairement à la lecture de la description faite ci-après en se référant aux dessins parmi lesquels :
- la figure 1 schématise le procédé selon l'invention,
- les figures 2 et 3 schématisent des perfectionnements du procédé selon l'invention.

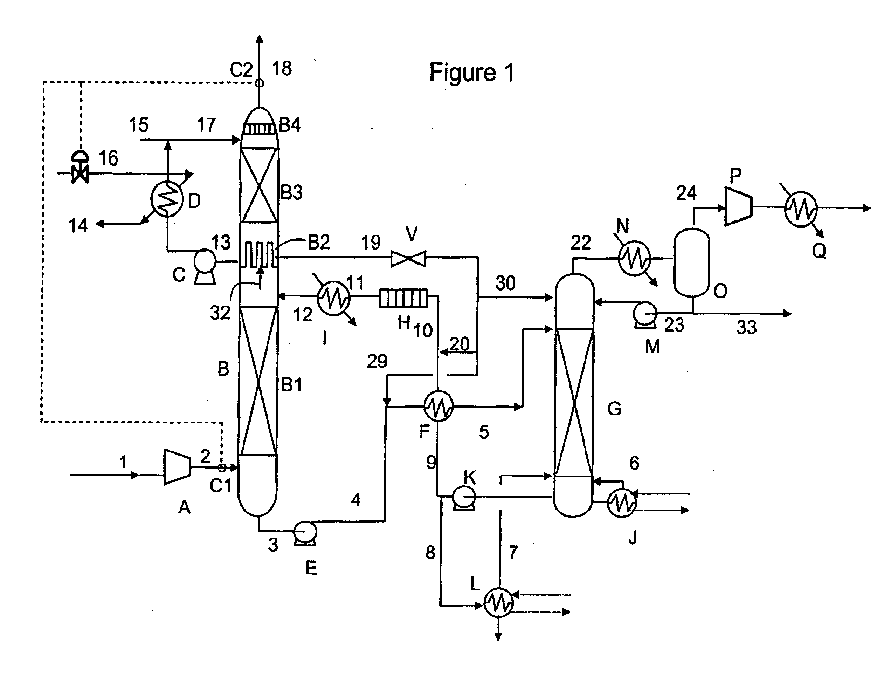

En référence à la figure 1, le gaz à traiter arrive par le conduit 1 à une pression qui peut être comprise entre 1 et 150 bars absolu, et à une température qui peut être comprise entre 10 °C et 70°C.

Le gaz peut être des fumées de combustion, un gaz naturel ou un gaz obtenu en queue du procédé Claus. Le gaz peut également être un gaz de synthèse, un gaz de conversion mis en oeuvre dans les centrales intégrées de combustion de charbon, de brut lourd, de bois ou de gaz naturel, un gaz issu de la fermentation de biomasse, un effluent issu d'une cimenterie ou d'une usine de sidérurgie.

Le gaz contient des composés acides tels que le CO₂ ou de l'H₂S entre 0,1 et 30% volume. Dans le cas des fumées de combustion, la teneur en composés de type SOx et NOx peut atteindre une valeur de l'ordre de 200 mg/Nm³ volume pour chacun desdits composés.

Le gaz arrivant par le conduit 1 peut être comprimé par l'organe A. Par exemple, dans le cas d'une fumée de combustion, l'élément A est une soufflante ou un compresseur assurant une augmentation de pression de l'ordre de 100 à 250 mbar.

Le gaz est introduit par le conduit 2 dans la section d'absorption B1 munie d'éléments de mise en contact entre gaz et liquide, par exemple des plateaux, un garnissage en vrac ou un garnissage structuré. Dans la section B1, le gaz est mis en contact avec la solution absorbante arrivant par le conduit 12. Le gaz circule à contre-courant de la solution liquide. La solution absorbante capte les composés acides, notamment le CO₂ et l'H₂S contenu dans le gaz. On évacue par le conduit 4 en fond de la section B1 une solution absorbante chargée en composés acides. On obtient un flux de gaz appauvri en composés acides en tête de la section B1, ce flux étant représenté par la flèche 32.

La composition de la solution absorbante est choisie pour sa capacité à absorber les composés acides. On peut mettre en oeuvre une solution aqueuse comportant, en général entre 10% et 80%, de préférence entre 20% et 60%, en composés réactifs.

On peut choisir les composés réactifs parmi les amines, par exemple la MEA (monoéthanolamine), DEA (diéthanolamine), MDEA (diméthyléthanolamine), DIPA (diisopropylamine), DGA (diglycolamine), des diamines, de la pipérazine, de l'hydroxyéthyl piperazine, la TMHDA (N,N,N',N'-Tétraméthylhexane-1,6-diamine).

Les composés réactifs peuvent également être choisis parmi les solvants à caractère physique, par exemple le méthanol, le sulfolane, les polyéthylèneglycols qui peuvent être éthérifiés, les pyrrolydones ou dérivés comme par exemple la N-méthylpyrrolidone, la N-formyl morpholine, l'acétyl morpholine, le carbonate de propylène.

En outre, la solution aqueuse peut comporter des additifs anti-oxydant qui limitent les phénomènes de dégradation des composés réactifs. Par exemple on peut utiliser les anti-oxydants de la famille des dithiophosphates ou de la famille des molécules contenant au moins une fonction thiol, en particulier les dérivés du thiadiazole, ou thioéther ou dithioéther.

La solution absorbante évacuée en fond de la section B1 est pompée, chauffée dans l'échangeur de chaleur F, puis introduite dans la colonne de régénération G. En général, on envoie la totalité de la solution absorbante dans la colonne de régénération.

Alternativement, on peut séparer la solution absorbante obtenue en fond de la section B1 en deux fractions. Puis on n'envoie qu'une seule fraction dans la colonne de régénération G. Par exemple, on peut séparer la solution absorbante chargée en composés acides en une fraction riche en composés acides et une fraction pauvre en composés acides. La fraction riche en composés acides est envoyée dans la colonne G, la fraction pauvre en composés acides est recyclée en étant introduite en tête de la section d'absorption. Ce mode de réalisation est détaillé par le document FR 2 877 858.

La colonne de régénération G est équipée d'internes de séparation gaz/liquide, par exemple des plateaux, des garnissages en vrac ou structurés. Le fond de la colonne G est équipé d'un rebouilleur J qui apporte la chaleur nécessaire à la régénération. Dans la colonne G, les composés acides sont libérés sous forme gazeuse et évacués en tête de G par le conduit 22.

La solution absorbante régénérée, c'est-à-dire appauvrie en composés acides, est évacuée en fond de la colonne G par le conduit 6, pompée par la pompe K, et introduite par le conduit 9 dans l'échangeur F pour être refroidie. La solution absorbante refroidie est évacuée par le conduit 10 pour être introduite dans le filtre H afin d'en retirer les particules et composés solides. La solution absorbante évacuée de H est refroidie dans l'échangeur de chaleur I puis introduit par le conduit 12 dans la section B1.

Le flux gazeux évacué en tête de G par le conduit 22 est partiellement liquéfié par refroidissement dans l'échangeur N puis introduit dans le séparateur O. Les condensats sont tout ou en partie recyclés par le conduit 23 et la pompe M en tête de la colonne G à titre de reflux. Les condensats restants sont évacués du procédé par le flux 33.

Dans le cas de l'application du procédé à la décarbonatation des fumées, on obtient en tête de la colonne G un gaz riche en CO₂. Le gaz évacué en tête du ballon O par le conduit 24 est liquéfié, en vue d'être injecté dans un réservoir souterrain. Le gaz peut être comprimé et déshydraté dans les organes P et Q en subissant une succession d'étape de compression et de refroidissement afin d'obtenir un flux de CO₂ liquide à 110 bars environ et d'une très grande pureté, par exemple supérieure à 99% volume de CO₂.

Une partie de la solution absorbante régénérée obtenue en fond de G peut être introduite par le conduit 8 dans l'appareil de vaporisation L, couramment nommé "reclaimer". Dans l'appareil L, la solution absorbante est chauffée jusqu'à être vaporisée. Les vapeurs sont évacuées de L par le conduit 7 pour être introduites dans la colonne G. Les sels formés par la dégradation de composés réactifs restent à l'état solide en solution liquide au fond de L et sont extraits cycliquement et évacués par le conduit 31. Au niveau du conduit 8, on peut ajouter de l'eau et éventuellement une base forte, par exemple une solution d'hydroxyde de sodium, pour neutraliser les sels, les acides et pour réguler la température de vaporisation.

Le gaz purifié 32 entraîne une quantité de composés réactifs. En effet, en tête de la zone B1, la solution absorbante liquide à forte concentration en composés réactifs, par exemple 30% poids dans le cas d'une MEA, se trouve à contre courant d'un gaz circulant à une vitesse importante. Il résulte de ce contact un fort entraînement de composés réactifs par le gaz. Deux principes gouvernent le phénomène d'entraînement en composés réactifs par le gaz. D'une part, une fraction de composés réactifs est entraînée sous forme vapeur dans le gaz purifié du fait de la tension de vapeur des composés réactifs. D'autre part, les pertes en composés réactifs sont dues à l'entraînement mécanique de gouttelettes de liquide dans le gaz. Ces deux phénomènes déterminent la quantité de composés réactifs entraînée par le gaz vers la section de lavage B3.

Selon l'invention, on met en oeuvre une section de lavage spécifique pour éviter des rejets et des pertes trop importants de composés réactifs : on effectue un lavage à l'eau du gaz pour récupérer les molécules de composés réactifs présentes dans le gaz purifié. Le gaz 32 est introduit dans la section de lavage B3 pour être mis en contact, à contre-courant, avec l'eau arrivant par le conduit 17. La section B3 comporte des éléments de mise en contact entre gaz et liquide, par exemple des plateaux, un garnissage en vrac ou un garnissage structuré. Le gaz purifié et débarrassé des traces de composés réactifs est évacué de B3 par le conduit 18. L'eau chargée en composés réactifs est récupérée en fond de la section de lavage B3.

Une partie de l'eau de lavage récupérée en fond de B3 est soutirée par le conduit 13 pompée par la pompe C, refroidie par l'échangeur de chaleur D avant d'être introduite en tête de la section B3 par le conduit 17. Dans l'échangeur D, l'eau de lavage est refroidie par un fluide frigorigène arrivant par le conduit 16 et évacué par le conduit 14.

Eventuellement, on peut effectuer une alimentation en eau fraiche par le conduit 15. Ladite eau est mélangée à l'eau de lavage circulant dans la boucle, puis l'eau est introduite par le conduit 17 dans la section de lavage B3.

La présente invention propose d'opérer le lavage avec une gestion spécifique de la température des flux gazeux entrant et sortant de la section de lavage B3. Selon l'invention, on utilise l'eau de lavage comme moyen de refroidissement par échange de chaleur direct. L'eau de lavage joue le rôle de fluide réfrigérant pour refroidir par le gaz circulant dans B3. Selon l'invention, la température de l'eau de lavage est contrôlée au moyen de l'échangeur D afin que la température du gaz traité sortant de la section par le conduit 18 se trouve à une température strictement inférieure, par exemple inférieure de 1°C, à la température du gaz brut arrivant par le conduit 2. Par exemple la température du gaz circulant dans 18 est inférieure d'une valeur comprise entre 1°C et 20°C, de préférence entre 2°C et 10°C à la température du gaz circulant dans le conduit 2. Le fait de baisser la température du gaz évacué par le conduit 18 permet, en déplaçant les équilibres thermodynamiques, de réduire la quantité de composés réactifs contenu dans le gaz 18. De plus, le refroidissement du gaz circulant dans B3 provoque la condensation d'une portion de l'eau contenue dans le gaz 32. La quantité d'eau condensée permet de diminuer la concentration en composés réactifs dans l'eau de lavage et donc améliore la capacité d'absorption des composés réactifs par l'eau de lavage.

Pour opérer le procédé selon l'invention, on peut mettre en oeuvre une régulation du refroidissement opéré par l'échangeur D en fonction des températures du gaz 18 et du gaz 2. Les températures des flux 2 et 18 sont mesurées respectivement par les capteurs C1 et C2. En fonction des températures mesurées par C1 et C2, on pilote la vanne V1 qui commande le débit de fluide frigorigène qui alimente D de manière à ajuster la température de l'eau de lavage recyclée par les conduits 13 et 17, et donc la température du gaz 18 refroidi par l'eau de lavage.

L'augmentation de la quantité d'eau de lavage provoquée par le refroidissement du gaz dans B3 est compensée, selon l'invention par une extraction d'eau dans le procédé au niveau de la régénération de la solution absorbante, par exemple par le flux 33 et/ou 24. Selon l'invention, on évacue une quantité d'eau au moins égale à la quantité d'eau condensée du fait de la différence de température entre le flux 2 et le flux 18. Cette quantité d'eau peut être évacuée sous forme liquide par soutirage par le conduit 33 des condensats récupérés dans le ballon O. La quantité d'eau peut également être évacuée sous forme vapeur avec le gaz évacué en tête du ballon O par le conduit 24. La quantité d'eau à évacuer du procédé peut également être soutirée en partie par le conduit 23 et en partie dans le gaz évacué par le conduit 24. Ainsi, on évite l'augmentation de teneur en eau dans la solution absorbante circulant en boucle fermée entre la section d'absorption B1 et la colonne de régénération G.

Comme représenté sur la figure 1, la section d'absorption B1 et la section de lavage B3 peuvent être disposées dans la même colonne B. Dans ce cas, on peut disposer un plateau B2 étanche au liquide permettant le passage du gaz de la section B1 vers la section B3. Alternativement, la section d'absorption B1 peut être opérée dans une première colonne, et la section de lavage B3 peut être opérée dans une deuxième colonne distincte de la première colonne. La tête de la première colonne étant équipée d'un conduit connecté au fond de la deuxième colonne pour transférer le gaz purifié de la première colonne à la deuxième colonne.

Pour minimiser le diamètre de l'équipement B, on peut travailler avec des vitesses de gaz très fortes, ce qui n'est pas favorable à une bonne séparation entre le liquide introduit dans B3 par 17 et le gaz évacué de B3 par 18. Selon l'invention, pour limiter les pertes de liquide dans le flux évacué par le conduit 18, on peut disposer un moyen B4 de séparation mécanique entre gaz et liquide en tête de la section B1. Par exemple, le moyen B4 peut prendre la forme d'un plateau sec ou d'une hauteur de garnissage non alimentée par du liquide, ou la forme d'un matelas éliminateur de goutte.

On récupère une première portion de l'eau en fond de B3 par le conduit 13, la pompe C et on recycle l'eau par le conduit 14, puis 17 en tête de la section B3. Le débit global d'eau de lavage introduit dans B3 par le conduit 17 est déterminé de manière à obtenir un bon contact hydrodynamique dans la section de lavage B3 et pour capter suffisamment de composés réactifs contenus dans le gaz afin de respecter la norme sur les rejets de composés réactifs dans le gaz évacué par le conduit 18.

Le bilan de la teneur en eau dans la solution absorbante sur la boucle globale est négatif : il y a des pertes en eau. Dans la section d'absorption B1, le gaz s'échauffe du fait de la réaction exothermique d'absorption des composés acides par l'amine. Le gaz 32 quittant B2 est plus chaud que le gaz introduit dans B2 par le conduit 2. De ce fait, le gaz 32 contient plus d'eau qu'en entrée dans B2 et provoque une perte d'eau. Par ailleurs, le flux riche en composés acides évacué par le conduit 24 contient également de l'eau.

Selon l'invention, on peut extraire, par le conduit 19, une deuxième portion de l'eau obtenue en fond de B3 pour la recycler dans le procédé afin, d'une part, de compenser les pertes en eau et, d'autre part, de récupérer et réutiliser les composés réactifs extraits du gaz purifié par lavage à l'eau. Plus précisément, l'invention propose de contrôler, au moyen de la vanne V, le débit de purge par le conduit 19 de manière à ce que le liquide prélevé par le conduit 19 en fond de la zone B3 contienne les composés réactifs entraînés en tête de B1 et la quantité d'eau nécessaire à compenser les pertes en eau. Le recycle par le conduit 19 permet de limiter le volume d'appoint en composés réactifs nécessaire au fonctionnement du procédé. De plus, l'évacuation des composés réactifs par le conduit de recycle 19 a pour but de réduire la concentration en composés réactifs dans la section de lavage B3 et donc d'obtenir un gaz 18 ayant une très faible teneur en composés réactifs. Par exemple, dans le cas de la décarbonatation des fumées de combustion, le recycle a pour but de répondre aux normes quant à la quantité maximum admissible de composés organiques volatiles (COV) contenus dans les fumées traitées 18 qui sont relâchées dans l'atmosphère.

En référence à la figure 1, l'eau prélevée par le conduit 19 peut être mélangée à la solution absorbante circulant à différents endroits dans le procédé.

L'eau peut être introduite par le conduit 20 dans le conduit 10 pour être mélangée avec la solution absorbante régénérée obtenue en fond de G. De préférence, on mélange l'eau avec la solution absorbante régénérée qui a été refroidie après passage à travers l'échangeur F.

L'eau peut être introduite par le conduit 29 dans le conduit 4 pour être mélangée avec la solution absorbante chargée en composés acides en fond de B1. De préférence, on mélange l'eau avec la solution absorbante chargée en composés acides, en amont de l'échangeur de chaleur F.

On peut également introduire l'eau prélevée par le conduit 19 dans la colonne de régénération G par le conduit 30.

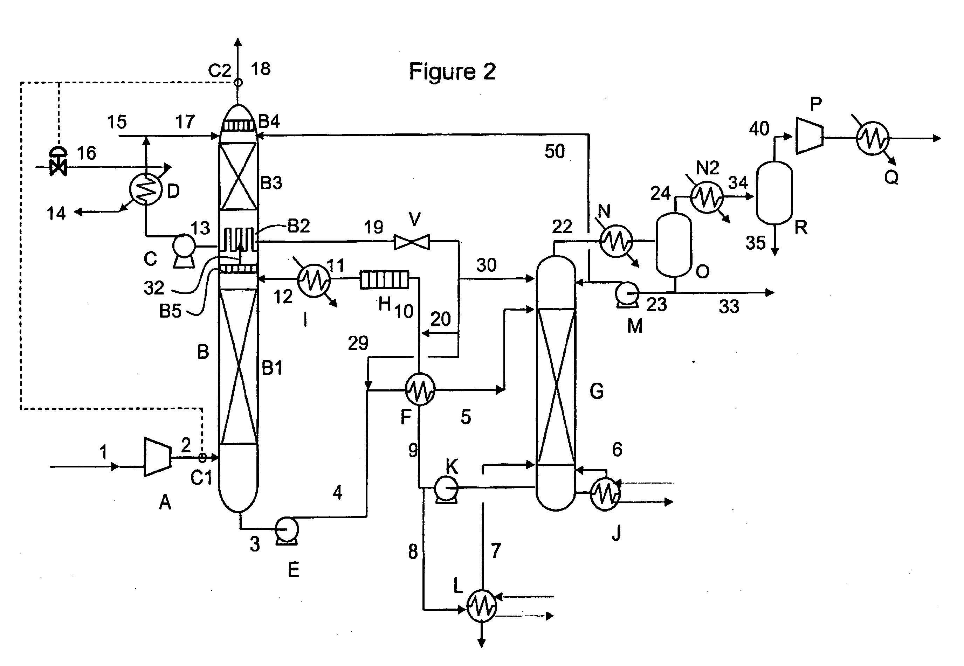

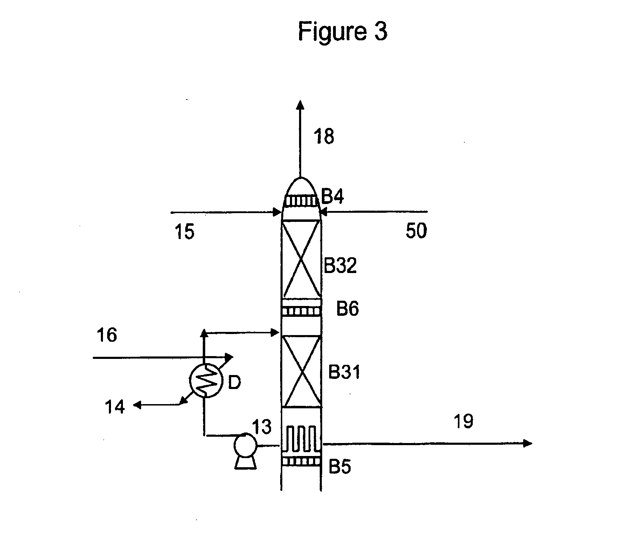

Le recycle d'eau par le conduit 19 décrit en référence à la figure 1 peut être insuffisant pour limiter la quantité d'amine entraînée dans la section de lavage B3. Dans ce cas, on peut, selon l'invention, mettre en oeuvre au moins l'une des solutions décrites en référence aux figures 2 et 3. La figure 2 schématise le procédé de la figure 1 avec des améliorations, la figure 3 schématise le haut de la colonne B décrit en référence à la figure 1. Les références des figures 2 et 3 identiques à celles de la figure 1 désignent les mêmes éléments.

Une première solution consiste à diminuer les entraînements mécaniques de gouttelettes de liquide dans le gaz circulant de la section d'absorption B1 vers la section de lavage B3. En référence à la figure 2, on dispose un moyen B5 de séparation mécanique entre le gaz et le liquide en tête de la section B1. Par exemple B5 peut être un plateau sec ou une hauteur de garnissage non alimentée par du liquide, ou un matelas éliminateur de goutte. Le moyen de séparation B5 permet de limiter l'entraînement de composés réactifs par gouttelettes de la section B1 vers la section B3 dans le but de limiter la quantité de composés réactifs dans la boucle de lavage et donc la quantité de composés réactifs entraînée par le gaz purifié 18. On peut estimer les pertes de composés réactifs par entraînement mécanique en tête de la section B3 à environ 50 % des pertes de composés réactifs dans le cas des fumées à pression atmosphérique. Le fait de disposer le moyen de séparation B5 en tête de la section d'absorption B1 permet donc une diminution d'un facteur 2 de la concentration en composés réactifs dans la section de lavage B1 et dans le flux 19, et donc des pertes de composés réactifs par entraînement mécanique dans le flux 18. La mise en oeuvre du moyen de séparation B5 peut induire une légère augmentation de la perte de charge du gaz traversant les sections B1 et B3, mais qui reste acceptable (en général moins de 15 % d'augmentation). Cette augmentation de la perte de charge peut être compensée par une augmentation de la pression du gaz à traiter par l'organe A.

Une deuxième solution consiste à réaliser un refroidissement modéré en tête de la colonne de régénération par l'échangeur de chaleur N. Un deuxième étage de condensation représenté par l'échangeur N2 est mis en place. Le gaz refroidi est dirigé vers le ballon R par le flux 34, les condensats étant évacués du procédé par le flux 35 tandis que le gaz acide est envoyé par le conduit 40 vers l'étape de compression. L'eau ainsi évacuée par les conduits 33 et 35 permet de réaliser un refroidissement plus conséquent du gaz épuré sortant de la section d'absorption par le conduit 18, et ceci en garantissant le bilan eau du procédé.

Une troisième solution consiste à augmenter le débit de purge par le conduit 19. En référence à la figure 2, on peut introduire par le conduit 50 une quantité d'eau supplémentaire en tête de la section de lavage B3 pour réduire la concentration en composés réactifs dans la section B3 et dans le liquide évacué par le conduit 19. L'eau introduite par le conduit 50 dans B3 peut provenir du flux d'eau venant de la tête de la colonne de régénération G : le conduit 50 prélève une fraction des condensats évacués en fond du ballon O par le conduit 23, pour l'introduire dans la section B3. Si on introduit par le conduit 50 un débit de liquide qui permet de doubler le débit de purge par le conduit 19, on peut diminuer d'un facteur 2 la concentration en composés réactifs dans la section de lavage B3 et dans le flux 19, et donc des pertes en composés réactifs par entraînement mécanique dans le flux 18. Cette solution est particulièrement bien adaptée dans le cas de la décarbonatation des fumées de combustion. En effet, bien que l'eau obtenue en fond du ballon O soit chargée en CO₂, l'introduction de cette eau dans la section B3 n'est pas pénalisante car on peut tolérer une concentration en CO₂ de l'ordre du pourcent dans le gaz évacué de B3 par le conduit 18.

Une quatrième solution consiste à utiliser une section de lavage avec deux étages. La figure 3 représente le haut de la colonne B de la figure 2 dans laquelle la section B3 est remplacée par une section munie de deux étages B31 et B32. Chacun des étages B31 et B32 est muni d'éléments de mise en contact entre gaz et liquide, par exemple des plateaux, un garnissage en vrac ou un garnissage structuré. Un moyen B6 de séparation mécanique des gouttelettes de liquide contenues dans le gaz est disposé entre les deux étages B31 et B32. Par exemple B6 peut être un plateau sec ou une hauteur de garnissage non alimentée par du liquide, ou un matelas éliminateur de goutte. Le gaz 32 issu de la section d'absorption B1 après avoir traversé le moyen de séparation B5, traverse l'étage B31 puis l'étage B32. L'eau est introduite dans la section de lavage par les conduits 15 et 50 en tête du deuxième étage B32 pour s'écouler à contre-courant du gaz dans l'étage B32 puis dans l'étage B31. L'eau recueillie en fond de la section d'absorption, c'est-à-dire en fond de l'étage B31 est prélevée par le conduit 13, refroidie par l'échangeur D et introduite en tête de la section B31, en dessous du moyen de séparation B6. Dans l'échangeur D, l'eau est refroidie par échange de chaleur indirect avec un fluide frigorigène arrivant par le conduit 16 et évacué par le conduit 14. Le premier étage B31 réalise une épuration grossière avec un débit d'eau de lavage relativement important par rapport à celui du deuxième étage B32. Puis, l'étage B32 de finition permet de réaliser une spécification poussée quant à la teneur en composés réactifs dans le gaz évacué de B32 par le conduit 18. Les flux d'eau introduits dans B32 ne comportant quasiment pas de composés réactifs, les pertes de composés réactifs par entraînement mécanique sont sensiblement nulles. La mise en oeuvre de l'étage B32 impose de choisir un garnissage spécifique qui permet de réaliser une bonne mise en contact entre un débit de liquide relativement faible comparé au débit de gaz à traiter. Par exemple, on peut utiliser un garnissage de type toile tissée. Ce type de garnissage permet d'atteindre des taux d'arrosage de liquide inférieur à 1 m³/m².h

Le fonctionnement du procédé schématisé par la figure 1, dans le cas de la décarbonatation d'une fumée de combustion par une solution aqueuse de MonoEthanolAmine (MEA), est illustré par les exemples numériques présentés ci-après.

L'exemple 1, respectivement l'exemple 2, donne dans le tableau 1, respectivement dans le tableau 2, les compositions des différents flux circulant dans le procédé décrit en référence à la figure 1.

Dans les exemples 1 et 2, les fumées à traiter arrivant par le conduit 1 sont identiques de manière à pouvoir comparer les deux procédés.

Les valeurs ont été obtenues par simulation du procédé au moyen d'un outil de simulation numérique Aspen, et correspondent à un fonctionnement stable du procédé.

### Exemple 1 :

L'exemple 1 correspond au procédé de la figure 1 opéré selon l'art antérieur, c'est à dire que la température du gaz évacué par le conduit 18 est supérieure à la température du gaz arrivant par le conduit 2. Dans ce cas on n'effectue pas de soutirage d'eau par le conduit 33.

**Tableau 1**

| **Flux** Débit molaire (kmol/h) | **1** | **32** | **18** | **15** | **19** | **24** | **33** |
|---|---|---|---|---|---|---|---|
| H2O | 16.016 | 27.978 | 18.280 | 3.114 | 12.811 | 0.84 | 0 |
| CO2 | 25.072 | 2.511 | 2.500 | | 0.015 | 22.572 | |
| MEA | | 0.060 | 0.00022 | | 0.06 | | |
| N2 | 138.483 | 138.478 | 138.478 | | | | |
| O2 | 7.352 | 7.351 | 7.351 | | | | |
| | | | | | | | |
| Total | 186.923 | 176.378 | 166.609 | 3.114 | 12.886 | 23.412 | 0 |
| | | | | | | | |
| Température (°C) | 40 | 55.5 | 45 | 35 | 45 | 35 | 35 |
| Pression (bar abs) | 1.03 | 1.04 | 1.02 | 1.5 | 1.04 | 1.8 | 1.8 |

On observe dans le tableau 1 que la teneur en MEA dans le flux 18 est de 2,2.10⁻⁴ kmol/h, ce qui correspond à 3,14mg/Nm³ de MEA dans le gaz traité. Le refroidissement considéré est de 45°C, soit 5°C de plus que le gaz d'entrée (40°C) et aucun soutirage n'est effectué par le flux 33 pour contrôler le bilan eau du procédé. Ce fonctionnement nécessite un appoint en eau par le conduit 15.

### Exemple 2 :

Le procédé est opéré selon l'invention, c'est à dire que les fumées traitées évacuées par le conduit 18 sont à une température inférieure à la température du gaz arrivant par le conduit 2. De plus, on effectue un soutirage d'eau par le conduit 33.

**Tableau 2**

| **Flux** Débit molaire (kmol/h) | **1** | **32** | **18** | **15** | **19** | **24** | **33** |
|---|---|---|---|---|---|---|---|
| H2O | 16.016 | 27.978 | 12.539 | 0.000 | 12.811 | 0.84 | 2.63 |
| CO2 | 25.072 | 2.511 | 2.500 | | 0.015 | 22.572 | 0 |
| MEA | | 0.060 | 0.00013 | | 0.06 | | 0 |
| N2 | 138.483 | 138.478 | 138.478 | | | | |
| O2 | 7.352 | 7.351 | 7.351 | | | | |
| | | | | | | | |
| Total | 186.923 | 176.378 | 160.868 | 0.000 | 12.886 | 23.412 | 2.630 |
| | | | | | | | |
| Température (°C) | 40 | 55.5 | 38 | 35 | 45 | 35 | 35 |
| Pression (bar abs) | 1.03 | 1.04 | 1.02 | 1.5 | 1.04 | 1.8 | 1.8 |

Concernant le fonctionnement du procédé décrit en référence à la figure 1, mettant en oeuvre un refroidissement du gaz traité, on observe dans le tableau 2 que la teneur en MEA dans le flux 18 est de 1,3.10⁻⁴ kmol/h, ce qui correspond à 1,9 mg/Nm³ de MEA dans le gaz traité. Le refroidissement considéré est de 38°C, soit 2°C de moins que le gaz d'entrée (40°C). Afin de satisfaire le bilan eau du procédé, un soutirage d'eau est effectué par le flux 33 (2,63 kmol/h).

La comparaison des deux exemples montre bien l'intérêt de l'invention. Le refroidissement du gaz épuré a permis de réduire de 40% les émissions de MEA dans le gaz épuré.

## Revendications

1. Procédé de capture des composés acides, incluant au moins l'un des composés CO₂ et H₂S, contenus dans un gaz à traiter (2), dans lequel on effectue les étapes suivantes :
a) on met en contact le gaz à traiter (2) avec une solution absorbante (12) comportant des composés réactifs en solution aqueuse de manière à obtenir un gaz appauvri en composés acides (32) et une solution absorbante enrichie en composés acides (3),
b) on régénère au moins une fraction de la solution absorbante enrichie en composés acides (3) dans une colonne de régénération (G) de manière à obtenir une solution absorbante régénérée (9) et un effluent gazeux riche en composés acides (22), la solution absorbante régénérée étant recyclée à l'étape a) en tant que solution absorbante,
c) on lave dans une section de lavage (B3) le gaz appauvri en composés acides obtenu à l'étape a) par mise en contact avec un flux d'eau liquide (17) ;
d) on mesure la température du gaz lavé (18) au moyen d'un premier capteur de température (C1) et la température dudit gaz à traiter (2) au moyen d'un deuxième capteur de température (C2) ;
e) on abaisse la température du gaz lavé (18) en dessous de la température dudit gaz à traiter (2), en refroidissant ledit gaz lavé (18) au moyen dudit flux d'eau liquide (17) dont la température est ajustée en fonction desdites températures mesurées par le pilotage d'une vanne (V1) commandant le débit d'un fluide frigorigène alimentant un échangeur de chaleur (D), ledit échangeur de chaleur (D) recevant une partie de l'eau (13) obtenue en fond de la section de lavage (B3) pour constituer au moins une partie dudit flux d'eau liquide (17) ;
f) on évacue dudit procédé une quantité d'eau contenue dans l'effluent gazeux riche en composés acides (22).

2. Procédé selon la revendication 1, dans lequel, à l'étape e) le flux d'eau liquide (17) est refroidi à une température déterminée de manière à obtenir un gaz lavé (18) dont la température est inférieure d'une valeur comprise entre 1°C et 20°C à la température dudit gaz à traiter (2).

3. Procédé selon l'une des revendications 1 ou 2, dans lequel on condense partiellement par refroidissement l'effluent gazeux riche en composés acides (22) pour obtenir des condensats liquides et un gaz enrichi en composés acides (24) et on introduit au moins une première partie des condensats (23) dans la colonne de régénération (G).

4. Procédé selon la revendication 3, dans lequel au moins une partie de ladite quantité d'eau est composée d'une deuxième partie desdits condensats liquides (33).

5. Procédé selon l'une des revendications 3 et 4, dans lequel au moins une partie de ladite quantité d'eau est évacuée sous forme vapeur dans ledit gaz enrichi en composés acides (24).

6. Procédé selon la revendication 5, dans lequel le gaz enrichi en composés acides (24) est partiellement condensé par refroidissement pour produire des condensats liquides (35) et une phase gazeuse (40) qui est comprimée.

7. Procédé selon l'une des revendications précédentes, dans lequel on recycle une deuxième partie de l'eau (19) obtenue en fond de la section de lavage, en effectuant au moins l'une des opérations suivantes :
- on mélange ladite deuxième partie de l'eau avec la solution absorbante régénérée obtenue à l'étape b),
- on introduit ladite deuxième partie de l'eau dans la colonne de régénération,
- on mélange ladite deuxième partie de l'eau avec la solution absorbante enrichie en composés acides obtenue à l'étape a).

8. Procédé selon l'une des revendications 1 à 7, dans lequel on prélève une troisième partie des condensats (50) et, à l'étape c), on met en contact le gaz appauvri en composés acides obtenus à l'étape a) avec le flux d'eau liquide (17) et, en outre, avec ladite troisième partie des condensats prélevés (50).

9. Procédé selon la revendication 8, dans lequel la section de lavage comporte une première (B31) et une deuxième zone (B32) de mise en contact et dans lequel, à l'étape c), on met en contact dans la première zone de mise en contact le gaz appauvri en composés acides obtenu à l'étape a) avec une partie de l'eau obtenue en fond de la section de lavage de manière à obtenir un gaz prélavé, puis on met en contact dans la deuxième zone de mise en contact ledit gaz prélavé avec ladite troisième partie des condensats prélevés.

10. Procédé selon l'une des revendications précédentes, dans lequel on fait circuler le gaz lavé obtenu à l'étape c) à travers un moyen de séparation mécanique entre gaz et liquide (B4).

11. Procédé selon l'une des revendications précédentes, dans lequel la solution aqueuse d'amine comporte entre 10 % et 80 % poids de composés réactifs choisis dans la liste constituée par la monoéthanolamine, la diéthanolamine, la diméthyléthanolamine, la diisopropylamine, la diglycolamine, la pipérazine, l'hydroxyéthyl piperazine, la N,N,N',N'-Tétraméthylhexane-1,6-diamine, le sulfolane, les polyéthylèneglycols, les pyrrolydones, la N-formyl morpholine, l'acétyl morpholine, le carbonate de propylène.

12. Procédé selon l'une des revendications précédentes, dans lequel le gaz à traiter est choisi dans la liste constituée par une fumée de combustion, un gaz naturel, un gaz obtenu en queue d'un procédé Claus, un gaz de synthèse, un gaz de conversion mis en oeuvre dans les centrales intégrées de combustion de charbon, de bois, de brut lourd ou de gaz naturel, un gaz issu de la fermentation de biomasse, un effluent issu d'une cimenterie ou d'une usine de sidérurgie.

## Patentansprüche

1. Verfahren zum Einfangen von sauren Verbindungen, einschließlich mindestens einer der Verbindungen CO₂ und H₂S, die in einem zu behandelnden Gas (2) enthalten sind, wobei die folgenden Schritte durchgeführt werden:
a) Inkontaktbringen des zu behandelnden Gases (2) mit einer absorbierenden Lösung (12), die reaktive Verbindungen in wässriger Lösung umfasst, um ein von sauren Verbindungen abgereichertes Gas (32) und eine mit sauren Verbindungen angereicherte absorbierende Lösung (3) zu erhalten,
b) Regenerieren mindestens einer Fraktion der mit sauren Verbindungen angereicherten absorbierenden Lösung (3) in einer Regenerationskolonne (G), um eine regenerierte absorbierende Lösung (9) und einen gasförmigen Abfluss (22), der reich an sauren Verbindungen ist, zu erhalten, wobei die regenerierte absorbierenden Lösung zu Schritt a) als absorbierende Lösung zurückgeführt wird,
c) Waschen in einem Waschabschnitt (B3) des in Schritt a) erhaltenen, von sauren Verbindungen abgereicherten Gases durch Inkontaktbringen mit einem flüssigen Wasserstrom (17);
d) Messen der Temperatur des gewaschenen Gases (18) mittels eines ersten Temperatursensors (C1) und der Temperatur des zu behandelnden Gases (2) mithilfe eines zweiten Temperatursensors (C2);
e) Absenken der Temperatur des gewaschenen Gases (18) unter die Temperatur des zu behandelnden Gases (2), indem das gewaschene Gas (18) mithilfe des flüssigen Wasserstroms (17) abgekühlt wird, dessen Temperatur, in Abhängigkeit von den gemessenen Temperaturen, durch das Betätigen eines Ventils (V1) angepasst wird, das den Durchfluss eines Kältemittels steuert, das einen Wärmetauscher (D) beaufschlagt, wobei der Wärmetauscher (D) einen Teil des Wassers (13) aufnimmt, dass am Boden des Waschabschnitts (B3) erhalten wird, um mindestens einen Teil des flüssigen Wasserstroms (17) zu bilden;
f) Ableiten einer Wassermenge, die in dem gasförmigen Abfluss, der reich an sauren Verbindungen ist (22), enthalten ist, aus dem Verfahren.

2. Verfahren nach Anspruch 1, wobei in Schritt e) der flüssige Wasserstrom (17) auf eine bestimmte Temperatur abgekühlt wird, um ein gewaschenes Gas (18) zu erhalten, dessen Temperatur unter einem Wert im Bereich zwischen 1 °C und 20 °C der Temperatur des zu behandelnden Gases (2) liegt.

3. Verfahren nach einem der Ansprüche 1 oder 2, wobei der gasförmige Abfluss, der reich an sauren Verbindungen ist (22), durch Abkühlen teilweise kondensiert wird, um flüssige Kondensate und ein mit sauren Verbindungen angereichertes Gas (24) zu erhalten, und mindestens ein erster Teil der Kondensate (23) in die Regenerationskolonne (G) eingeführt wird.

4. Verfahren nach Anspruch 3, wobei mindestens ein Teil der Wassermenge aus einem zweiten Teil der flüssigen Kondensate (33) besteht.

5. Verfahren nach einem der Ansprüche 3 und 4, wobei mindestens ein Teil der Wassermenge in Form von Dampf in das mit sauren Verbindungen angereicherte Gas (24) abgeleitet wird.

6. Verfahren nach Anspruch 5, wobei das mit sauren Verbindungen angereicherte Gas (24) durch Abkühlen teilweise kondensiert wird, um flüssige Kondensate (35) und eine gasförmige Phase (40), die komprimiert ist, zu erzeugen.

7. Verfahren nach einem der vorhergehenden Ansprüche, wobei ein zweiter Teil des Wassers (19), das am Boden des Waschabschnitts erhalten wird, zurückgeführt wird, indem mindestens einer der folgenden Vorgänge durchgeführt wird:
- Mischen des zweiten Teils des Wassers mit der regenerierten absorbierenden Lösung, die in Schritt b) erhalten wurde,
- Einführen des zweiten Teils des Wassers in die Regenerationskolonne,
- Mischen des zweiten Teils des Wassers mit der mit sauren Verbindungen angereicherten absorbierenden Lösung, die in Schritt a) erhalten wurde.

8. Verfahren nach einem der Ansprüche 1 bis 7, wobei ein dritter Teil der Kondensate (50) entnommen wird und in Schritt c) in das von sauren Verbindungen abgereicherte Gas, das in Schritt a) erhalten wurde, mit dem flüssigen Wasserstrom (17) und außerdem mit dem dritten Teil der entnommenen Kondensate (50) Kontakt gebracht wird.

9. Verfahren nach Anspruch 8, wobei der Waschabschnitt einen ersten (B31) und eine zweiten Bereich (B32) zum Inkontaktbringen umfasst, und wobei in Schritt c) in dem ersten Bereich zum Inkontaktbringen das von sauren Verbindungen abgereicherte Gas, das in Schritt a) erhalten wurde, mit einem Teil des Wassers, das am Boden des Waschabschnitts erhalten wurde, in Kontakt gebracht wird, um ein vorgewaschenes Gas zu erhalten, dann das vorgewaschene Gas mit dem dritten Teil der entnommenen Kondensate in dem zweiten Bereich zum Inkontaktbringen in Kontakt gebracht wird.

10. Verfahren nach einem der vorhergehenden Ansprüche, wobei man das gewaschene Gas, das in Schritt c) erhalten wurde, durch eine Einrichtung zur mechanischen Trennung von Gas und Flüssigkeit (B4) zirkulieren lässt.

11. Verfahren nach einem der vorhergehenden Ansprüche, wobei die wässrige Aminlösung zwischen 10 Gew.-% und 80 Gew.-% reaktive Verbindungen umfasst, ausgewählt aus der Liste, bestehend aus Monoethanolamin, Diethanolamin, Dimethylethanolamin, Diisopropylamin, Diglycolamin, Piperazin, Hydroxyethylpiperazin, N,N,N',N'-Tetramethylhexan-1,6-diamin, Sulfolan, Polyethylenglycolen, Pyrrolydonen, N-Formylmorpholin, Acetylmorpholin, Propylencarbonat.

12. Verfahren nach einem der vorhergehenden Ansprüche, wobei das zu behandelnde Gas ausgewählt ist aus der Liste, bestehend aus einem Rauchgas, einem Erdgas, einem Gas, das am Ende eines Claus-Verfahrens erhalten wird, einem Synthesegas, einem Konversionsgas, das in den integrierten Anlagen zur Verbrennung von Kohle, Holz, schwerem Rohöl oder Erdgas eingesetzt wird, einem Gas, das aus der Biomassefermentation stammt, einem Abfluss, der aus einem Zementwerk oder einer Eisenhütte stammt.

## Claims

1. A method of capturing acid compounds comprising at least one of the compounds CO₂ and H₂S contained in a gas to be treated (2), wherein the following stages are carried out:
a) contacting the gas to be treated (2) with an absorbent solution (12) comprising reactive compounds in aqueous solution so as to obtain a gas depleted in acid compounds (32) and an absorbent solution enriched in acid compounds (3),
b) regenerating at least a fraction of the absorbent solution enriched in acid compounds (3) in a regeneration column (G) so as to obtain a regenerated absorbent solution (9) and a gaseous effluent rich in acid compounds (22), the regenerated absorbent solution being recycled to stage a) as absorbent solution,
c) washing in a wash section (B3) the gas depleted in acid compounds obtained in stage a) by contacting with a liquid water stream (17),
d) measuring the temperature of washed gas (18) by means of a first temperature detector (C1) and the temperature of said gas to be treated (2) by means of a second temperature detector (C2),
e) lowering the temperature of washed gas (18) bellow the temperature of said gas to be treated (2), by cooling said washed gas (18) by means of said liquid water stream (17) chose temperature is adjusted according to said measured temperatures by actuating a valve (V1) that controls the refrigerant flow supplying a heat exchanger (D), said heat exchanger (D) receiving part of the water (13) obtained in the bottom of wash section (B3) thus making up at least part of said liquid water stream (17),
f) discharging from said process an amount of water contained in the gaseous effluent rich in acid compounds (22).

2. A method as claimed in claim 1 wherein, in stage e), liquid water stream (17) is cooled to a predetermined temperature so as to obtain a washed gas (18) chose temperature is between 1°C and 20°C lower than the temperature of said gas to be treated (2).

3. A method as claimed in any one of claims 1 or 2, wherein the gaseous effluent rich in acid compounds (22) is partly condensed by cooling so as to obtain liquid condensates and a gas enriched in acid compounds (24), and at least a first part of condensates (23) is fed into regeneration column (G).

4. A method as claimed in claim 3, wherein at least part of said amount of water consists of a second part of said liquid condensates (33).

5. A method as claimed in any one of claims 3 and 4, wherein at least part of said amount of water is discharged in vapour form in said gas enriched in acid compounds (24).

6. A method as claimed in claim 5, wherein the gas enriched in acid compounds (24) is partly condensed by cooling in order to produce liquid condensates (35) and a gas phase (40) that is compressed.

7. A method as claimed in any one of the previous claims, wherein a second part of the water (19) obtained in the bottom of the wash section is recycled by carrying out at least one of the following operations:
- mixing said second part of the water with the regenerated absorbent solution obtained in stage b),
- feeding said second part of the water into the regeneration column,
- mixing said second part of the water with the absorbent solution enriched in acid compounds obtained in stage a).

8. A method as claimed in any one of claims 1 to 7, wherein a third part of the condensates (50) is withdraw and, in stage c), the gas depleted in acid compounds obtained in stage a) is contacted with liquid water stream (17) and, furthermore, with said third part of the withdraw condensates (50).

9. A method as claimed in claim 8, wherein the wash section comprises a first (B31) and a second (B32) contacting zone and wherein, in stage c), the gas depleted in acid compounds obtained in stage a) is contacted in the first contacting zone with part of the water obtained in the bottom of the wash section so as to obtain a prewashed gas, then said prewashed gas is contacted in the second contacting zone with said third part of the withdraw condensates.

10. A method as claimed in any one of the previous claims, wherein the washed gas obtained in stage c) is circulated through a gas/liquid mechanical separation means (B4).

11. A method as claimed in any one of the previous claims, wherein the aqueous amine solution comprises between 10 % and 80 % by weight of reactive compounds selected from the list consisting of monoethanolamine, diethanolamine, dimethylethanolamine, diisopropylamine, diglycolamine, piperazine, hydroxyethyl piperazine, N,N,N',N'-tetramethylhexane-1,6-diamine, sulfolane, polyethylene glycols, pyrrolidones, N-formyl morpholine, acetyl morpholine, propylene carbonate.

12. A method as claimed in any one of the previous claims, wherein the gas to be treated is selected from the list consisting of a combustion fume, a natural gas, a Claus tail gas, a syngas, a conversion gas used in integrated coal, wood, heavy crude or natural gas combustion plants, a gas resulting from biomass fermentation, an effluent from a cement plant or an ironworks plant.
